# EUROPEAN PATENT APPLICATION

(11) **EP 1 178 389 A2**
(43) Date of publication of application: **06.02.2002**
(21) Application number: 01306246.8
(22) Date of filing: 20.07.2001
(51) Int. Cl.: G06F 1/18

(54) **Audio-dedicated personal computer**

(30) Priority: 21.07.2000 GB 0018000
(71) Applicant: Media Tools Plc, London W2H 8DJ (GB)
(72) Inventor: Arbiter, John, London, NW3 2UB (GB); Pfaff, Rupert, Teesdale Close, London E2 6PQ (GB)
(74) Representative: Rees, David Christopher

(57) **Abstract**

A multitrack audio recording apparatus (11) in the form of a PC. The apparatus comprises a housing (12) having a front panel (13) and mounted within the housing (12), a central processing unit (14), a memory (15), a sound card (16) and a power supply (17). The housing (12) is made from 2 mm steel and the front panel (13) from heavy duty aluminium. The apparatus further includes a heavy duty input socket (21) mounted on the front panel and connected to the sound card.

## Description

The present invention is concerned with a personal computer system which is dedicated to audio applications. It is particularly, but not exclusively concerned with apparatus for making multitrack audio recordings.

Computer hardware and software have been used for composing and producing music and for producing and processing sounds for approximately twenty years. The systems used have generally taken one of two approaches: firstly, purpose designed hardware with proprietary software held in integrated circuits (ICs), and secondly proprietary software programs written to run on the popular computer platforms of the day.

Early examples of the first approach include keyboard instruments, hard disk multitrack recorders and more recently various hard disk recorders, sequencers, drum machines, synthesizers and samplers. The disadvantages of this type of system include a lack of functional flexibility and a high cost relative to functionality.

Early examples of the second approach include UMI software running on Acorn BBC hardware. Later examples include various software packages running on Commodore, Atari and more recently Apple Macintosh and PC hardware.

Disadvantages of this type of system include poor suitability of popular home/office hardware to audio and music applications.

Insofar as it relates to audio recording, the present invention generally follows the second of the two approaches but uses novel hardware and software to address the significant disadvantages of the current systems which use this approach. More generally, the invention seeks to provide an audio-dedicated personal computer (PC) which is versatile in that it is suitable for a range of audio processing applications, while at the same time being sufficiently practical and robust for use in recording studios and in live music situations.

According to one aspect of the invention, there is provided a personal computer comprising: a power supply; a housing; a central processor unit within the housing; a memory store within the housing; an audio signal input connected to the processor; a front panel forming part of the housing and being made from a strong rigid material; and a processing module removable mounted in the front panel; the audio signal input being a heavy duty input socket mounted on the front panel.

The processing module may be a multitrack recording module or may be a sound synthesis or processing module such as an effects unit, or a sound sampler module. The input socket is preferably connected to the processor via an interface, such as a sound card. The interface may act as an analogue/digital converter.

According to a preferred aspect of the invention, there is provided a multitrack audio recording apparatus, in the form of a PC, comprising: a power supply, a central processor unit, a memory store, an audio interface connected to the processor, and a housing; the power supply, processor and memory being located within the housing; the housing having a front panel made from a strong, rigid material; the apparatus further including a heavy duty input socket mounted on the front panel and connected to the interface.

Preferably, the interface is a digital/audio interface being arranged to convert analogue audio signals to digital signals, to transmit the digital signals to the processor, to receive digital signals from the processor and to convert digital signals to analogue audio output signals.

Preferably, the interface is also arranged to receive digital signals, in addition to or instead of analogue signals. Preferably it is also arranged to provide a digital output in addition to or instead of an analogue output.

Conveniently, the processor and memory form the essential parts of a PC and the interface constitutes a sound card. The disadvantage of known PC arrangements is that the input to the sound card is inaccessible in that it is located at the rear of the unit and is impractical in that it is designed to take very small 1/8" (3.175mm) jack plugs. However, the present invention uses a heavy duty input mounted in the front panel. This is preferably wired through the unit to a socket on the back panel where the signal path can be permanently connected by a further connecting lead to the poor quality sockets used in conventional sound cards. These are usually designed to be connected only once (on installation) or occasionally at most. The present invention enables these poor quality components to be used infrequently as intended and can provide the user with high quality industrial grade connectors which can be replugged frequently eg. several times per day as is the norm during audio/music production, without damaging the component and degrading the audio signal path. In an alternative design, the sound card may allow for internal connection, eliminating the need for a back panel socket and the further connecting lead.

The term "heavy duty" in this case means recording/music industry standard components which are intended for constant repeated use. Examples of such plugs and sockets include ¼" (6.35mm) jack plugs and sockets, 3-pin XLR plugs and sockets, and input/output components sold under the trade mark NEUTRIK.

The front panel is preferably of heavy duty aluminium with a thickness of eg. 5-10 mm.
Otherwise, the housing preferably comprises a 2mm sheet steel cover and secure fasteners rather than the plastic front panel, thinner steel or plastic cover and clip fasteners used in home/office PCs. These features reduce transmitted component noise. Preferably, the power supply, fan and processor are all selected for low equipment noise. Preferably, the equipment foot is made from a sound insulating material, such as Sorbothane™ acoustic absorbent rubber, in order to absorb vibration and thus reduce transmitted component vibration and noise.

Preferably, vibration damping and acoustic absorbent sheet materials are used on surfaces inside the housing to reduce transmitted component noise.

Preferably, the interface includes an amplifier. It may also include a digital input for external digital sources and/or a digital external output, both of which are preferably heavy duty components. The respective inputs and outputs of the interface may be combined as a single input/output component. Preferably, the interface is arranged to accept/send signals using the musical instrument digital interface (MIDI).

Preferably, the housing dimensions conform to the standard 19" (48cm) music/audio rack dimensions. Preferably, a rubber gasket is used behind the rack ear to improve acoustic/vibration isolation of the unit from the metal music/audio standard 19" rack when so mounted.

The invention may be adapted to provide a range of applications oriented systems (AOSs) targeting different music applications eg. sound synthesis and multitrack recording of multi instrumental compositions. Whilst the basic "computer frame" is common to all systems, each AOS may be defined by the inclusion of a different software operating system. Preferably, the housing front panel includes a bay which accepts a range of control panels each suited to a different music/audio application and thus a different AOS. Typically the control panels might incorporate knobs; switches and lights which use the MIDI to control the most commonly used functions of the AOS for which it is designed. One example might incorporate "tape" transport controls (play, stop, record etc) for multitrack recording systems and synthesizer controls (cutoff frequency, resonance etc) for sound synthesis systems. In addition the panels might address sound sampling, audio editing, DJ mixing and score printing.

Preferably, the apparatus includes a modem and appropriate software for selecting sound samples or MIDI files from an installation as described in EP-A-945865, and then downloading the samples.

The invention may be carried into practice in various ways and some embodiments will now be described by way of example with reference to the accompanying drawings, in which:
Figure 1 is a simplified schematic diagram of an apparatus in accordance with the invention; and
Figure 2 is a front view of a typical front panel in accordance with one embodiment of the invention.

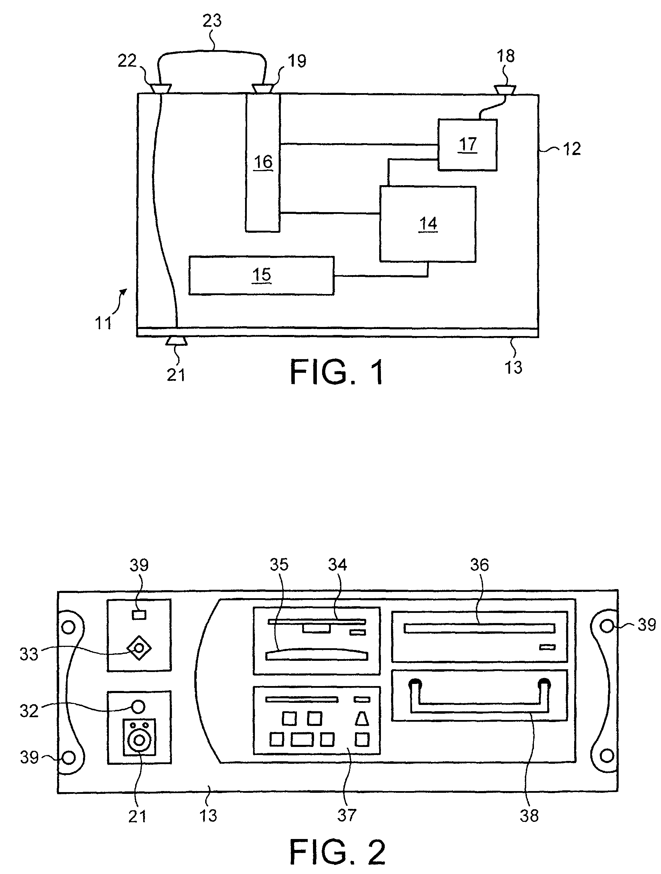

Figure 1 shows a multitrack audio recording apparatus 11. The apparatus comprises a housing 12 having a front panel 13 and mounted with the housing 12, a central processing unit (CPU) 14, a memory 15, a sound card 16 and a power supply 17. The housing 12 is made from 2mm steel and the front panel 13 from 5-10 mm aluminium.

The power supply 17 includes a mains transformer and is connected to an external mains power source via a socket 18. The power supply powers the apparatus and is therefore connected to the CPU 14 and the sound card 16; connection to the sound card 16 may be via the CPU 14. The sound card 16 has a standard 2mm audio input socket 19 at the rear.

The front panel 13 carries a heavy duty dual 3-pin jack socket 21 which is capable of receiving 3-pin XLR-type plugs and also standard ¼" jack plugs. The socket 21 is connected to an output socket 22 at the rear of the housing. A cable 23 connects the output socket 22 to the sound card input 19, thus the heavy duty socket 21 provides an input to the sound card 16.

The sound card 16 is capable of receiving MIDI note data and control signals, e.g. notes and sequences played on synthesisers and drum machines, and analogue audio signals, eg. guitars and microphones. The analogue signals are converted to digital signals by the sound card 16 for processing by the CPU 14. The processed signals are stored in the memory 15.

The operating software is arranged to allow a large number of audio tracks to be stored simultaneously having been supplied sequentially. The operating software also allows the separate tracks to be synchronised. The software provides a multi-channel mixing facility and the option of applying effects separately to each track.

Figure 2 shows a typical layout for a front panel 13 in accordance with a particular embodiment of the invention. The front panel 13 has a heavy duty socket 21 as mentioned above. In addition, there is a power switch 31, an indicator lamp 32 and a headphone output socket 33. There is a floppy disc drive 34, a zip-drive 35 and a CD-ROM drive 36. A control panel 37 includes standard tape control buttons, and there is a removable disk drive 38.

The panel 13 is in the standard 19" format and includes mounting holes 39 for locating the unit in a standard rack.

It will be understood that for particular applications, the individual components 21 and 34 to 38 may be varied.

## Claims

1. Audio processing apparatus in the form of a personal computer (PC) comprising: a power supply, a central processor unit, a memory store, an audio interface connected to the processor, and a housing; the power supply, processor and memory being located within the housing; the housing having a front panel made of a strong rigid material; the apparatus further including a heavy duty input socket mounted on the front panel and connected to the interface.

2. Apparatus as claimed in Claim 1 in the form of a multitrack audio recording apparatus.

3. Apparatus as claimed in Claim 1 or Claim 2 in which the interface is a digital/audio interface, arranged to convert analogue audio signals to digital signals, to transmit the digital signals to the processor, to receive digital signals from the processor and to convert digital signals to analogue audio output signals.

4. Apparatus as claimed in any preceding Claim and which the interface is also arranged to receive digital signals, in addition to or instead of analogue signals.

5. Apparatus as claimed in any preceding Claim in which the interface is arranged to provide a digital output in addition to or instead of an analogue output.

6. Apparatus as claimed in any preceding Claim in which the process and memory form the essential parts of a PC and the interface constitutes a sound card.

7. Apparatus as claimed in Claim 6 in which the heavy duty input mounted on the front panel is wired through the housing to a socket at the rear and the signal path is permanently connected by a further connecting lead to the input socket to the sound card.

8. Apparatus as claimed in any preceding Claim in which the front panel is of heavy duty aluminium with a thickness in the range of 5-10 mm.

9. Apparatus as claimed in Claim 8 in which the housing comprises a sheet steel cover having a thickness between 1.5 and 3 mm and in which the power supply, fan and processor are all selected for low equipment noise.

10. Apparatus as claimed in any preceding Claim including a foot made from a sound insulating material in order to absorb vibration and reduce transmitted component vibration and noise, and in which vibration damping and acoustic absorbent sheet materials are used on the surfaces inside the housing to reduce transmitted component noise.

11. Apparatus as claimed in any preceding Claim in which the interfacing is arranged to accept and send signals using the musical instrument digital interface (MIDI).

12. Apparatus as claimed in any preceding Claim in which the housing dimensions conform to the standard 19 inch (48 cm) music/audio rack dimensions.
